Europäisches Patentamt

European Patent Office

Office européen des brevets

(11) Veröffentlichungsnummer: **0 024 603**
**A1**

# (12) EUROPÄISCHE PATENTANMELDUNG

(21) Anmeldenummer: 80104685.5

(22) Anmeldetag: 08.08.80

(51) Int. Cl.³: **G 01 N 21/59**

(30) Priorität: 16.08.79 DE 2933066

(43) Veröffentlichungstag der Anmeldung:
11.03.81 Patentblatt 81 10

(84) Benannte Vertragsstaaten:
AT BE CH FR GB IT LI LU NL SE

(71) Anmelder: Brück, Gernot Klaus
Hermann-Pflaume-Strasse 6
D-5000 Köln 41(DE)

(71) Anmelder: Gadebusch, Dedo-Alexander
Ursula-Kuhr-Weg 8
D-5000 Köln 71(DE)

(72) Erfinder: Brück, Gernot Klaus
Hermann-Pflaume-Strasse 6
D-5000 Köln 41(DE)

(72) Erfinder: Gadebusch, Dedo-Alexander
Ursula-Kuhr-Weg 8
D-5000 Köln 71(DE)

(74) Vertreter: Patentanwälte Dr. Solf & Zapf
Postfach 13 02 19
D-5600 Wuppertal 1(DE)

(54) Verfahren und Vorrichtung zur Messung der Absorption von Laserstrahlung in Medien.

(57) Die Erfindung betrifft ein Verfahren und eine Vorrichtung zur Messung der Absorption von Laserstrahlung in Medien, wobei die aus dem jeweiligen Medium austretende Laserstrahlung vor dem Auftreffen auf einen Strahlungsempfänger (4) mit einer Blende (3) ausgeblendet wird, wobei der Blendendurchmesser gleich oder kleiner als der Durchmesser der Laserstrahlung unmittelbar vor dem Eintritt in das Medium ist.

FIG.1

EP 0 024 603 A1

Croydon Printing Company Ltd

- 1 -

Verfahren zur Messung der Absorption von
Laserstrahlung in Medien

Die vorliegende Erfindung betrifft ein Verfahren zur
Messung der Absorption von Laserstrahlung in Medien.

Dabei geht die vorliegende Erfindung von der allgemein
bekannten Parallelstrahl-Photometrie aus, wobei Laserstrahlen verwendet werden, die eine hohe Intensität
und Parallelität der Strahlen aufweisen. Treffen derartige Laserstrahlen auf ein Medium, in dem Strukturen
vorhanden sind, die groß genug sind um Streulicht zu
erzeugen, so ist es Ziel der Laserphotometrie, dieses
Phänomen zu messen. Der durch die Probe bzw. das Medium
hindurchgeführte parallele Laserstrahl erfährt durch
die in der Probe bzw. in dem Medium vorhandenen Partikel einen Intensitätsverlust, verursacht durch Streuung
und Reflexion, wobei Streustrahlung auftritt. Nach diesem
Prinzip arbeitet das aus der DE-OS 27 51 365 bekannte
Verfahren. Bei diesem bekannten Verfahren können aber
insofern Ungenauigkeiten auftreten, als ein gewisser
Streuanteil des das Medium verlassenden Laserstrahls mitgemessen wird, so daß der ausgegebene Messwert insofern
ungenau sein kann.

Der vorliegenden Erfindung liegt nun die Aufgabe zugrunde, ein Verfahren und eine Vorrichtung zu schaffen, mit der derartige Ungenauigkeiten vermieden werden, indem der von dem Strahlungsempfänger aufgenommene Strahlungsmeßwert keinerlei Streulichanteil mehr enthält. Erfindungsgemäß wird dies dadurch erreicht, daß die aus dem jeweiligen Medium austretende Laserstrahlung vor dem Auftreffen auf einen Strahlungsempfänger mit einer Blende abgeblendet wird, wobei der Blendendurchmesser gleich oder kleiner als der Durchmesser der Laserstrahlung unmittelbar vor dem Eintritt in das Medium ist. Damit wird erfindungsgemäß erreicht, daß die vom Strahlungsempfänger aufgenommene Strahlungsintensität tatsächlich um diejenige Intensität verringert ist, die durch die Streustrahlung verursacht wird. Durch entsprechende vorherige Eichung kann man somit Aufschluß über die im Medium vorhandene Partikelmenge erreichen, die die Streuung verursacht. Vorteilhafterweise wird die Messung bei einem Blendendurchmesser - Strahlendurchmesser-Verhältnis von 1 : 1 durchgeführt. Denn für die Empfindlichkeit des erfindungsgemäßen Meßverfahrens sind neben den Faktoren Lichtintensität und Wellenlänge auch das Verhältnis des Blendendurchmessers zum Strahlendurchmesser verantwortlich. Dabei ergibt sich die höchste Empfindlichkeit, wenn der Strahlendurchmesser und der Blendendurchmesser identisch sind.

Weiterhin kann es von Vorteil sein, wenn die Messungen hintereinander mit verschiedenen Blendendurchmessern durchgeführt werden. Dabei kann es sich um eine kontinuierliche Blendenverstellung oder um eine schrittweise Blendenverstellung handeln. Durch diese Verfahrensvariante kann die wellenlängenabhängige Absorption festgestellt werden. Als Referenzgröße wird dabei die Transmission des Mediums bei einer Blende groß gegen den

- 3 -

Strahlungsdurchmesser genommen und mit dem nachfolgenden Meßergebnis entsprechend dem erfindungsgemäßen Verfahren ins Verhältnis gesetzt. Voraussetzung hierfür ist allerdings, daß vorher eine Beziehung zwischen dem Blendendurchmesser und dem Meßergebnis für die zu untersuchenden Partikel gefunden wird.

Weiterhin kann es erfindungsgemäß zweckmäßig sein, wenn Messungen bei verschiedenen Wellenlängen der Laserstrahlen durchgeführt werden. Hierzu kann vorteilhafterweise ein durchstimmbarer Laser verwendet werden. Hierdurch kann die Absorption auch aufgrund Veränderung der Wellenlänge festgestellt werden, und zwar unter Beibehaltung des gleichen Blendendurchmessers. Es wird dabei ermöglicht, die Wellenlänge einzustellen, in der das zu untersuchende Medium keine Eigenabsorption hat.

Indem während der Messung der Strahlungsempfänger kontinuierlich oder schrittweise um 180° zur Strahlungslängsachse verschwenkt wird, kann auch die Streulichtcharakteristik als winkelabhängige Größe des jeweiligen Mediums gemessen werden. Somit kann auch eine Aussage darüber erhalten werden, in welche Richtung die Streuverluste abgestrahlt werden. Diese winkelabhängige Messung der Streustrahlung wird als sogenannte "Nephelometrie" bezeichnet. Ist zum Beispiel hierbei eine Vorzugsrichtung bekannt, kann das Streulicht, das in diese abgestrahlt wird, gemessen werden, ohne daß die Eigenabsorption des Mediums wesentlich in das Meßergebnis eingeht. Da bei dem erfindungsgemäßen Verfahren der Betrag des gesamten Streulichtverlustes durch die Nullgrad-Stellung festgestellt wird, kann nun von der winkelabhängigen Messung der entsprechende absolute Betrag der Streuverluste erfaßt werden. Bei der Messung mit 180° schwenkbarem Strahlungsempfänger und gleichzeitig variabler Blende kann das

- 4 -

optimale Meßverhältnis eingestellt werden. Indem in weiterer Ausgestaltung der Erfindung der Strahlungsempfänger auf einer Kreisbahn um den Laserstrahl herumgeschwenkt wird,und zwar zusammen mit der Blende, die vorzugsweise eine Spaltblende ist, kann eine dreidimensionale Messung der Streuverluste erfolgen.

Um auch eine Untersuchung der Formen der einzelnen, die Streuung verursachenden Partikel durchzuführen, kann es weiterhin zweckmäßig sein, wenn an das Medium während der Messung Wirkfelder, insbesondere Magnet- oder elektrische Felder angelegt werden.

Anhand der in den beiliegenden Zeichnungen dargestellten Ausführungen von Vorrichtungen zur Durchführung des erfindungsgemäßen Verfahrens wird die Erfindung näher erläutert. Es zeigen:

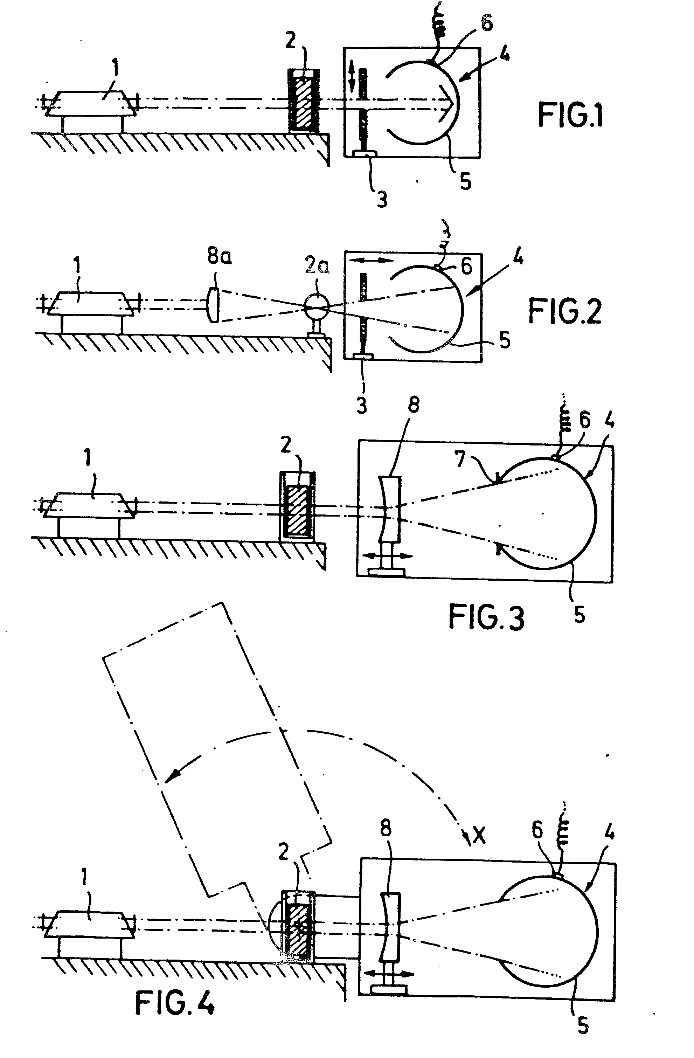

Fig. 1 - 7    prinzipielle Ansichten verschiedener Ausführungsformen erfindungegemäßer Messvorrichtungen.

In Fig. 1 ist der prinzipielle Aufbau einer erfindungsgemäßen Meßvorrichtung dargestellt. Diese besteht aus einem Laser 1. Dabei kann es sich zweckmäßigerweise um einen durchstimmbaren Laser handeln, so daß Laserstrahlung unterschiedlicher Wellenlänge erzeugt werden kann. Die vom Laser 1 ausgesendete parallele kohärente monochromatische Strahlung hoher Energie durchläuft eine Probe 2, die ein Medium enthält, indem eine Intensitätsabsorption der Laserstrahlung erfolgt. Diese Absorption setzt sich aus einer mediumbedingten Eigenabsorption und einer Strahlungsstreuung zusammen. Die Strahlungsstreuung resultiert aus Verunreinigungen des Mediums, wobei die Stärke der Streuung eine Aussage über die

- 5 -

Größe und Menge der die Streuung verursachenden Partikel im Medium erstellt. Indem nun hinter der Probe 2 eine Blende 3 angeordnet ist, deren Durchmesser gleich oder kleiner als der Strahlungsdurchmesser der Laserstrahlung vor Eintritt in die Probe ist, wird erreicht, daß die durch das in der Probe 2 befindliche Medium erzeugte Streustrahlung vollständig aus dem Strahlengang der Strahlung ausgeblendet wird, die auf einenhinter der Blende 3 angeordneten Strahlungsempfänger 4 fällt. Der Durchmesser der Laserstrahlung beträgt ca. 0,8 mm. Der Strahlungsempfänger 4 mißt die um die Streustrahlungsverluste und die Eigenabsorption verringerte Strahlungsenergie, und durch entsprechende Eichung, wobei die mediumspezifische Eigenabsorption berücksichtigt wird, erhält man als Endergebnis eine Meßgröße, die ausschließlich eine Aussage über den Streustrahlungsenergieverlust macht, so daß damit Aufschluß über die Partikelmenge im Medium erzielt wird. Der Strahlungsempfänger 4 besteht aus einer Ulbrichtschen Kugel 5 mit einem an deren Innenwand angeordneten Fotodetektor 6. Dabei ist der Fotodetektor derart angeordnet, daß er nicht unmittelbar von der in die Ulbrichtsche Kugel einfallenden Strahlung beaufschlagt wird. Durch die Verwendung der Ulbrichtschen Kugel wird erreicht, daß der Fotodetektor, wie bereits gesagt, nicht unmittelbar von dem Laserstrahl beaufschlagt wird, was aufgrund des geringen Strahlungsdurchmessers nur eine praktisch punktuelle Bestrahlung der Detektorfläche verursachen würde, sondern daß eine gleichmäßige Ausstrahlung der gesamten Detektorfläche herbeigeführt wird.

In Fig. 2 sind gleiche Teile wie in Fig. 1 mit denselben Bezugsziffern versehen. Dabei durchläuft die vom Laser 1 kommende Strahlung jedoch zunächst eine Sammellinse 8a, die an ihrer Austrittsseite plan ausgebildet ist. Im Brennpunkt der Sammellinse 8a ist die Probe 2a in einem kugelförmigen Probenhalter enthalten. Hinter dem Probenhalter liegt im Strahlengang die Blende 3 und hinter dieser der Strahlungsempfänger 4. Die Blende 3 ist in und gegen die Strahlenrichtung, wie durch den Doppelpfeil angegeben, verschiebbar, was praktisch einer Variation des Blendendurchmessers entspricht. Diese Vorrichtung ist insbesondere zur Messung kleinster Proben geeignet, wobei durch die Bündelung der Strahlen in der Probe dort viel Strahlungsenergie vorhanden ist.

Wie sich aus Fig. 3 ergibt, kann der Strahlungsempfänger 4 auch derart aufgebaut sein, daß die Blende als separates Bauteil entfällt und von der Öffnung 7 der Ulbrichtschen Kugel 5 gebildet wird. Da der Strahlungsdurchmesser der Laserstrahlung etwa 0,8 mm beträgt und der Durchmesser der Eintrittsöffnung 7 etwa 2 - 3 mm, muß, damit eine Ausblendung der Streustrahlung erfolgen kann, vor der Eintrittsöffnung 7 eine Streulinse 8 angeordnet sein, die eine Aufweitung der Strahlung erzeugt. Durch Verschiebung der Streulinse 8 in oder gegen die Strahlungsrichtung kann die jeweilig erforderliche Ausblendung erfolgen und somit praktisch eine variable Blende erreicht werden.

In Fig. 1 kann die Blende ebenfalls im Durchmesser verstellbar sein. Dies kann durch eine Art Irisblende erfolgen oder aber durch eine Blendenaustauschbarkeit. Diese kann konstruktiv dadurch gelöst werden, daß auf einer Drehscheibe mehrere Blendenöffnungen unterschiedlichen Durchmessers auf einem gemeinsamen Kreis um den Mittelpunkt der Scheibe angeordnet sind, wobei die Kreisbahn durch die Mittelachse der Laserstrahlung verläuft. Bei der Ausführung gemäß Fig. 3 ist es zweckmäßig, wenn die Streulinse 8, die als einzelne Linse oder Linsensystem ausgeführt sein kann, innerhalb einer Staubfalle angeordnet ist, damit sich keine zusätzlichen Verluste durch Schmutzpartikel auf der Linse ergeben können.

In Fig. 4 ist eine Ausführung gemäß Fig. 3 gezeigt, wobei jedoch der Strahlungsempfänger zusammen mit der Linse 8 eine konstruktive Einheit bilden und gemeinsam um 180° schwenkbar, wie durch den Doppelpfeil X angezeigt, um die Probe 2 herum gelagert sind. Dadurch ist es möglich, die Streustrahlung, die aus der Probe 2 heraustritt, abhängig von der jeweiligen Winkellage des Strahlungsempfängers genau ihrer Intensität nach zu erfassen.

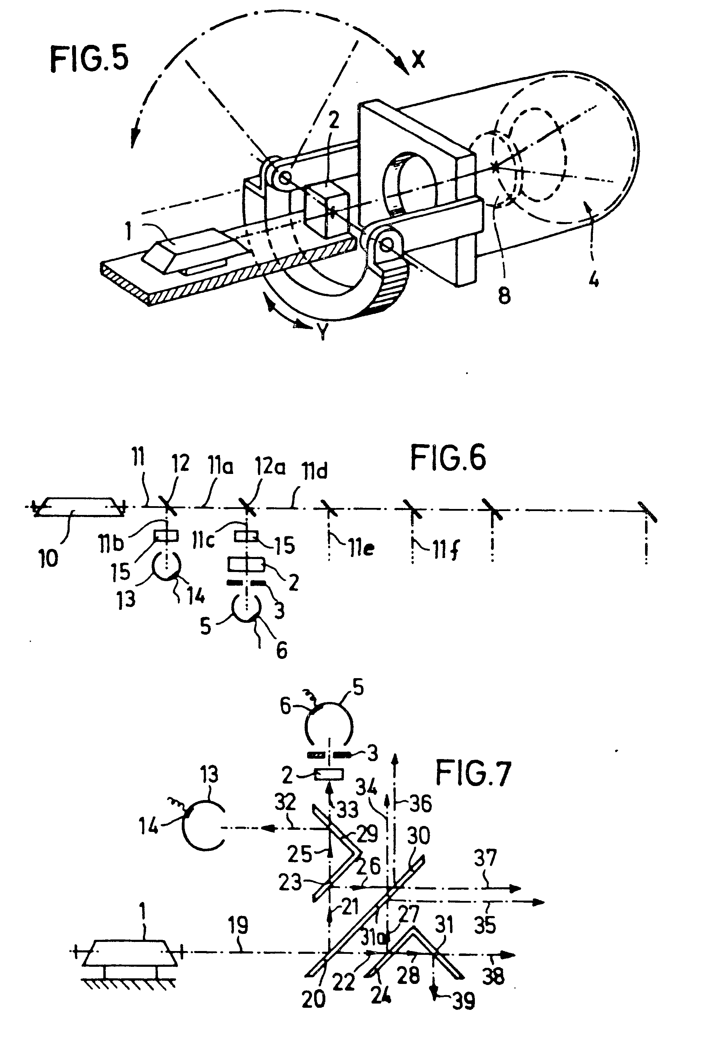

Wie in Fig. 5 prinzipiell gezeigt ist, kann die aus Strahlungsempfänger 4 und Blende 3 bzw. Linse 8 gebildete Einheit auch auf einer Kreisbahn entsprechend dem eingezeichneten Doppelpfeil Y um die Probe 2 herum drehbar angeordnet sein, so daß eine dreidimensionale Erfassung der aus der Probe austretenden Streustrahlung möglich ist.

In Fig. 6 ist eine Mehrfach-Meßvorrichtung dargestellt, bei der mit einem durchstimmbaren Laser mehrere Meßvorrichtungen, beispielsweise gemäß Fig. 1, betrieben werden können. Hierbei wird der von dem Laser 10 ausgesendete kohärente Lichtstrahl 11 auf einen Strahlenteiler 12 gelenkt, wo der Lichtstrahl in zwei Teilstrahle 11a und 11b aufgeteilt wird. Das Teilungsverhältnis beträgt z.B. 90 : 10. Dabei dient der Teilstrahl 11b als Referenzstrahl und der Teilstrahl 11a als Meßstrahl. Der Referenzstrahl 11b wird in eine Ulbrichtsche Kugel 13 geleitet, und die Lichtintensität wird in dieser, wie beispielsweise zu Fig. 1 beschrieben, von einem Fotodetektor 14 erfaßt und in ein elektrisches Signal umgewandelt. Der Meßstab 11a, der z. B. 90% der Strahlungsenergie des aus dem Laser 10 austretenden Strahls aufweist, wird auf einen Strahlenteiler 12a geleitet, wobei aus dem Meßstrahl 11a ein Meßstrahl 11c abgeteilt wird, der z.B. 10% der ursprünglichen Strahlungsenergie des aus dem Laser austretenden Strahls 11 umfaßt und somit die gleiche Energieintensität besitzt wie der Referenzstrahl 11b. Der weiterhin aus dem Strahlenteiler 12a austretende Meßstrahl 11d umfaßt nunmehr nur noch 80% der ursprünglichen Energie des Laserstrahls 11. Wie prinzipiell dargestellt, kann nun der Strahl 11d weiter aufgeteilt werden, und zwar derart, daß jeweils wieder Teilmeßstrahlen erzeugt werden, die die gleiche Intensität wie der Referenzstrahl 11b aufweisen. Die Teilmeßstrahlen 11c, e, f usw. fallen auf eine Meßvorrichtung, wie sie in Fig. 1 beschrieben ist, so daß im vollen Umfange darauf verwiesen werden kann, und gleiche Teile sind hier mit den gleichen Bezugszeichen wie in Fig. 1 versehen. In die Strahlengänge des Referenzstrahls 11b sowie der Teilmeßstrahlen 11c, 11e, 11f usw. sind jeweils Kerrzellen 15 unmittelbar hinter den Strahlenteilern 12, 12a, 12b usw. angeordnet. Mittels dieser Kerrzellen können die einzelnen Meßvorrichtungen für die Teilmeßstrahlen ein- und abgeschaltet werden, da die einzelnen Kerrzellen für unterschiedliche Wellenlängen geöffnet bzw. gesperrt sind. Somit ist es möglich, die unterschiedlichen Meßplätze nacheinander für verschiedene Wellenlängen in Betrieb zu nehmen, indem entsprechend der jeweils von dem durchstimmbaren Laser abgesendeten Wellenlänge einer der Meßplätze in Betrieb ist. In den Referenzstrahlengang ist vorzugsweise ebenfalls eine Kerrzelle angeordnet, damit evtl. durch die Kerrzellen bedingte Intensitätsverluste gleichmäßig sowohl im Referenzstrahlengang als auch im Meßstrahlengang auftreten. Die Ausgangssignale der Fotodetektoren im Referenzstrahlengang und im Meßstrahlengang

- 1 -

Ansprüche

1. Verfahren zur Messung der Absorption von Laserstrahlung in Medien, d a d u r c h   g e k e n n z e i c h - n e t,  daß die aus dem jeweiligen Medium austretende Laserstrahlung vor dem Auftreffen auf einen Strahlungsempfänger mit einer Blende ausgeblendet wird, wobei der Blendendurchmesser gleich oder kleiner als der Durchmesser der Laserstrahlung unmittelbar vor dem Eintritt in das Medium ist.

2. Verfahren nach Anspruch 1, d a d u r c h   g e k e n n - z e i c h n e t,  daß mehrere Messungen hintereinan- der mit verschiedenen Blendendurchmessern durchgeführt werden.

3. Verfahren nach Anspruch 1 oder 2, d a d u r c h   g e - k e n n z e i c h n e t,  daß mehrere Messungen bei verschiedenen Wellenlängen der Laserstrahlung durchgeführt werden.

4. Verfahren nach einem oder mehreren der Ansprüche 1 - 3, d a d u r c h   g e k e n n z e i c h n e t, daß während der Messung der Strahlungsempfänger konti- nuierlich oder schrittweise um $180^{\circ}$ zur Strahlenlängs- achse um eine das Medium enthaltende Probe verschwenkt werden über elektrische Leitungen auf die beiden Eingänge eines Differenzverstärkers gegeben. Der eigentliche Meßwert wird sodann durch Quotientenbildung mittels eines Quotientenverstärkers aus dem Differenzsignal und dem Referenzsignal erhalten und kann dann auf ein beliebiges Anzeigegerät, beispielsweise eine Digitalanzeige, ausgegeben werden.

In Fig. 7 ist eine weitere Möglichkeit dargestellt, wie ein Mehrfachmeßplatz aufgebaut sein kann. Hierbei fällt die aus dem Laser 1 kommende Strahlung 19 zunächst auf einen Strahlenteiler 20 mit einem Teilungsverhältnis von reflektiertem Strahl 21 zu durchgehendem Strahl 22 von 50:50. Die Strahlen 21, 22 fallen jeweils wieder auf einen Strahlenleiter 23, 24 mit dem Teilungsverhältnis 50:50. Die dabei entstehenden Teillichtstrahlen 25, 26, 27, 28, fallen wiederum auf Strahlenteiler 29, 30, 31, 31a, mit jeweils einem Teilungsverhältnis 50:50. Dabei entstehen die Ausgangsstrahlen 32, 33, 34, 35, 36, 37, 38, 39. Diese Ausgangsstrahlen besitzen alle dieselbe Strahlenenergie, wobei dies unter Verwendung von Strahlenteilern erreicht wird, die alle gleich, z.B. als halbdurchlässiger Spiegel, ausgebildet sind. Im gewählten Beispiel werden auf diese Weise sieben Arbeitsplätze und ein Referenzplatz geschaffen, die wie in Fig. 6 ausgebildet sind. Es ist jedoch ebenfalls möglich, beispielsweise durch Verdoppelung 15 Arbeitsplätze und einen Referenzplatz zu schaffen. Diese Ausbildung gemäß Fig. 7 hat den Vorteil, daß sie einerseits sehr genau und andererseits relativ preiswert ist.

- 2 -

wird.

5. Verfahren nach einem oder mehreren der Ansprüche 1 - 4, d a d u r c h   g e k e n n z e i c h n e t, daß der Strahlungsempfänger kreisförmig um die Längsachse der Laserstrahlung um die Probe herum verschwenkt wird.

6. Verfahren nach einem oder mehreren der Ansprüche 1 - 5, d a d u r c h   g e k e n n z e i c h n e t, daß während der Messung das Medium von Wirkfeldern, vorzugsweise von elektrischen oder magnetischen Feldern, beeinflußt wird.

7. Vorrichtung zum Durchführen des Verfahrens nach den Ansprüchen 1 - 6, g e k e n n z e i c h n e t d u r c h  einen Laser (1) und eine  im Strahlengang des Lasers angeordnete  Probe zur Aufnahme des Mediums  sowie eine hinter der Probe im Strahlengang angeordnete  Blende (3), deren Durchmesser gleich oder kleiner dem Durchmesser des Laserstrahls ist, sowie einen  hinter der Blende angeordneten Strahlungsempfänger (4).

8. Vorrichtung nach Anspruch 7, d a d u r c h   g e - k e n n z e i c h n e t, daß vor der Probe (2a) eine Sammellinse (8a) angeordnet ist, in deren Brennpunkt die vorzugsweise als Kugel ausgebildete Probenhalterung (2a) angeordnet ist.

9. Vorrichtung nach Anspruch 7 oder 8, d a d u r c h g e k e n n z e i c h n e t, daß die Blende (3) im Durchmesser variabel ist.

10. Vorrichtung nach Anspruch 7 oder 8, d a d u r c h

gekennzeichnet, daß die Blende aus der Eintrittsöffnung (7) der Ulbrichtschen Kugel (5) gebildet ist und der Eintrittsöffnung im Strahlengang eine Aufweitungslinse (8) vorgeordnet ist.

11. Vorrichtung nach Anspruch 10, dadurch gekennzeichnet, daß die Aufweitungslinse (8) in einer Staubfalle angeordnet ist.

12. Vorrichtung nach einem oder mehreren der Ansprüche 7 - 11, dadurch gekennzeichnet, daß die Blende (3) zusammen mit dem Strahlungsempfänger (4) zu einer Einheit zusammengefaßt ist und diese Einheit um die Probe (2) in einem Bogen von 180° zur Strahlungslängsachse schwenkbar gelagert ist.

13. Vorrichtung nach einem oder mehreren der Ansprüche 7 - 12, dadurch gekennzeichnet, daß die aus der Blende (3) und dem Strahlungsempfänger (4) gebildete Einheit um die Probe (2) auf einer Kreisbahn bewegbar angeordnet ist.

14. Vorrichtung nach einem oder mehreren der Ansprüche 7 - 13, dadurch gekennzeichnet, daß hinter dem Laser ein Strahlenteiler (12) zur Aufteilung der Laserstrahlung in einen Meßstrahl (11a) und einen Referenzstrahl (11b) angeordnet ist sowie weitere Strahlenteiler (12a, b, c, d, usw.) im Meßstrahl (11a) zur Aufteilung desselben in mehrere Teilmeßstrahlen (11c, 11e, 11f, usw.) angeordnet sind.

15. Vorrichtung nach Anspruch 14, dadurch gekennzeichnet, daß der Referenzstrahl (11b) und die Teilmeßstrahlen (11c, 11e, 11f, usw.) dieselbe Intensität besitzen.

16. Vorrichtung nach Anspruch 7 - 13, d a d u r c h g e k e n n z e i c h n e t, daß hinter dem Laser ein Strahlenteiler (20) angeordnet ist und die von diesem erzeugten Teilstrahlen (21, 22) wieder auf jeweils einen Strahlenteiler (23, 24) fallen zur Erzeugung weiterer Teilstrahlen (25, 26, 27, 28), die auf Strahlenteiler (29, 30, 31, 31a) fallen, um Ausgangsstrahlen (32, 33, 34, 35, 36, 37, 38, 39) als Meßstrahlen und Referenzstrahl zu erzeugen, wobei die einzelnen Strahlenteiler alle dasselbe Teilungsverhältnis 50:50 besitzen.

17. Vorrichtung nach Anspruch 15 oder 16, d a d u r c h g e k e n n z e i c h n e t, daß in die Strahlen- gänge der Teilmeßstrahlen (11c, 11e, 11f, usw., 32-39) Kerrzellen (15) unmittelbar hinter den Strahlenteilern (12a, 12b, 12c, usw., 29-31a) angeordnet sind, die auf unterschiedliche Wellenlängen ansprechen.

18. Vorrichtung nach Anspruch 16, d a d u r c h g e - k e n n z e i c h n e t, daß in dem Strahlengang des Referenzstrahls (11b) ebenfalls eine Kerrzelle (15) angeordnet ist.

19. Vorrichtung nach einem oder mehreren der Ansprüche 14 - 18, d a d u r c h g e k e n n z e i c h n e t, daß der Referenzstrahl (11b, 32) von einem Strahlungsempfänger aus einer Ulbrichtschen Kugel (13) und einem in dieser angeordneten Fotodetektor (14) gemessen wird.

20. Vorrichtung nach einem oder mehreren der Ansprüche 14 - 19, d a d u r c h g e k e n n z e i c h n e t, daß das Ausgangssignal des Strahlungsempfängers des Referenzstrahls und jeweils das Ausgangssignal eines Teilmeßstrahls auf die Eingänge eines Differenzverstärkers gegeben werden, dessen Ausgang mit einem
Eingang eines Quotientenverstärkers verbunden ist,
dessen zweiter Eingang mit dem Ausgang des Strahlungsempfängers des Referenzstrahls verbunden ist.

FIG.1

FIG.2

FIG.3

FIG.4

-1/2-

0024603

**FIG.5**

**FIG.6**

**FIG.7**